# EUROPÄISCHE PATENTSCHRIFT

(11) **EP 3 361 134 B1**
(45) Veröffentlichungstag und Bekanntmachung des Hinweises auf die Patenterteilung: **29.04.2020**
(21) Anmeldenummer: 17155439.7
(22) Anmeldetag: 09.02.2017
(51) Int. Cl.: F16L 41/03, F16L 21/035, F16L 23/04, F16L 37/12

(54) **VERBINDUNGSEINHEIT**
CONNECTING UNIT
UNITÉ DE LIAISON

(43) Veröffentlichungstag der Anmeldung: 15.08.2018
(73) Patentinhaber: Georg Fischer JRG AG, 4450 Sissach (CH)
(72) Erfinder: Heer, Peter, 79807 Lottstetten (DE)
(74) Vertreter: Fenner, Seraina

(56) Entgegenhaltungen:
- EP-A1- 0 385 052
- DE-A1-102013 109 403
- DE-T2- 69 914 586
- US-A1- 2002 093 199

## Beschreibung

Die Erfindung betrifft eine Verbindungseinheit mit zu verbindenden Rohrleitungskomponenten insbesondere Anschlusselementen, enthaltend eine Einsteckeinheit und eine korrespondierende Aufnahmeeinheit, wobei die Einsteck-und Aufnahmeeinheit mit den zu verbindenden Rohrleitungskomponenten einstückig ausgebildet bzw. daran angeformt sind, wobei die Einsteckeinheit als zylinderförmiger Bund ausgebildet ist, dessen Aussendurchmesser dem Innendurchmesser der Aufnahmeeinheit entspricht und ineinander steckbar sind, wobei am Aussenumfang des zylinderförmigen Bunds der Einsteckeinheit oder am Innenumfang der Aufnahmeeinheit ein Dichtelement angeordnet ist, wobei an der Einsteckeinheit und an der Aufnahmeeinheit jeweils ein Flansch angeordnet ist, wobei der Flansch an der Einsteckeinheit nach bzw. hinter dem zylindrischen Bund angeordnet ist und der Flansch an der Aufnahmeeinheit an der Stirnseite angeordnet ist, wobei bei zusammengesteckter Einsteck- und Aufnahmeeinheit die Flansche stirnseitig aneinander liegen, einen Sicherungsring zur axialen Fixierung der zusammengesteckten Einsteck- und Aufnahmeeinheit, wobei der Sicherungsring aus zwei identischen Halbschalen besteht.

Rohrleitungen insbesondere im Trinkwasserbereich sind heute in vielen Fällen aus Kunststoff mit Ausnahme der Anschlusselemente wie bspw. Verteiler, Ventile usw. diese sind in der Regel aus einem metallischen Material hergestellt. Unabhängig davon ob das Anschlusselement aus einer Kupferlegierung, einem andern metallischen Werkstoff oder Kunststoff hergestellt ist, werden die Anschlusselemente üblicherweise mit der Rohrleitung verschraubt, wobei bei Kunststoffgewinden ein zusätzlich dichtendes Element wie bspw. ein O-Ring mit eingebaut wird, da das Kunststoffgewinde selbst nicht dichtend ist bzw. zur Dichtung nicht ausreicht. Jedoch um die Trinkwasserzulassung zu erreichen ist eine Systemanbindung der Anschlusselemente gemäss DVGW W 534 (Deutscher Vereins des Gas- und Wasserfachs) gefordert, die ein dichtendes Anschlussgewinde aufweist, welches die Voraussetzungen der DIN-Norm EN 10226-1 erfüllt, welche eine Anbindung an das Trinkwassersystem mittels eines dichtenden Kunststoffgewindes nicht zulässt, weshalb in der Regel Übergangsstücke aus Kunststoff und einem metallischen Anschlussteil mit einem Gewinde vorzusehen sind.

Die Installation ist durch eine Gewindeverbindung sehr aufwendig, da das Gewinde vor dem Verschrauben mit einer dichtenden Masse versehen werden muss, um anschliessend dicht verschraubt werden zu können. Zudem wird zur Montage eines Anschlusselements, welches ein Gewinde zur Befestigung aufweist ein Werkzeug benötigt, sowie auch das Anziehmoment bei solchen Verbindungen immer unterschiedlich ausfällt, was ein weiterer Nachteil einer Verschraubung ist.

Des Weiteren existieren auch Verbindungen zwischen Anschlusselementen und Rohrleitungen, die auf ein Gewinde verzichten und mittels eines Kupplungsrings verbunden sind. Eine solche Rohrverbindung ist in der EP 0 291 331 B1 offenbart. Der Nachteil der oben erwähnten Verbindung besteht darin dass, eine Schraube zum einseitigen Befestigen benötigt wird was kein schnelles und komfortables Montieren auf der Baustelle ermöglicht. Zudem lösen sich Schraubenverbindungen leicht wenn Vibrationen auftreten.

Die GB 866 626 offenbart eine weitere Möglichkeit einer Rohrkupplung, wobei die Rohre einen stirnseitigen Wulst aufweisen und dazwischen ein Spalt angeordnet ist und dies von einer Dichtlippe umgeben ist, die wiederum von einem Spannring zusammengehalten wird.

Nachteilig bei dieser Variante ist, dass die Rohre nur stirnseitig aneinander liegen bzw. mit einer Dichtlippe dazwischen verspannt sind, dies reduziert die Stabilität. Eine weitere Rohrverbindung offenbart die DE 10 2013 109 403 A1. Es wird ein Verbindungselement zum Verbinden zweier ineinander steckbaren und mit wenigstens einem Dichtring versehene Anschlussnippel sowie ein die Anschlussnippel übergreifendes zwei Halbschalen aufweisendes hülsenartigen Element gezeigt.

Es ist Aufgabe der Erfindung eine Verbindungseinheit vorzuschlagen, die eine einfache und schnell montierbare Verbindung zwischen Rohrleitung und Rohrleitungskomponente ermöglicht sowie eine sichere und dichte den Zulassungsvorschriften DVG W 534 entsprechende Verbindung darstellt, wie auch dem geforderten Druck- und Zugtest stand hält und einen modularen Aufbau mit verschiedenen Rohrleitungskomponenten zulässt.

Diese Aufgabe wird erfindungsgemäss dadurch gelöst, dass die Halbschalen die stirnseitig aneinander liegenden Flansche umschliessen, wobei die Halbschalen mit einem Schnappverschluss miteinander verbunden sind, wobei am einen Ende der Halbschale ein Einsteckelement des Schnappverschlusses und am anderen Ende der Halbschale ein Aufnahmeelement des Schnappverschlusses angeordnet sind. Die erfindungsgemässe Verbindungseinheit zur Verbindung von Rohrleitungskomponenten insbesondere von Anschlusselementen enthält eine Einsteckeinheit und eine korrespondierende Aufnahmeeinheit. Die Einsteckeinheit wie auch die Aufnahmeeinheit sind an den Rohrleitungskomponenten bzw. am Anschlusselement angeformt bzw. die Einsteckeinheit wie auch die Aufnahmeeinheit ist jeweils mit der Rohrleitungskomponente oder einem sonstigen Anschlusselement als ein Teil ausgebildet. Das heisst, dass die jeweiligen miteinander zu verbindenden Teile eine entsprechende Einsteckeinheit oder Aufnahmeeinheit aufweisen.

Die Einsteckeinheit ist als zylinderförmiger Bund ausgebildet dessen Aussendurchmesser dem Innendurchmesser der Aufnahmeeinheit entspricht um die Einsteckeinheit in die Aufnahmeeinheit einzuführen. Um die Dichtheit zu gewährleisten ist am Aussenumfang des zylinderförmigen Bunds der Einsteckeinheit oder am Innenumfang der Aufnahmeeinheit ein Dichtelement angeordnet. Vorzugsweise ist ein O-Ring als Dichtelement in einer Nut am zylinderförmigen Bund der Einsteckeinheit angeordnet. An der Aufnahmeeinheit wie auch an der Einsteckeinheit ist jeweils ein Flansch angeordnet, welcher der axialen Arretierung in montiertem Zustand dient. Der Flansch der Aufnahmeeinheit ist stirnseitig angeordnet, wobei der Flansch an der Einsteckeinheit etwas zurückversetzt bzw. hinter bzw. nach dem zylinderförmigen Bund angeordnet ist. Dies ermöglicht das Einführen der Einsteckeinheit in die Aufnahmeeinheit und zwar so weit, bis dass die beiden Flansche aneinander anliegen. Um die ineinander gesteckte Einsteck-und Aufnahmeeinheit der Rohrleitungskomponenten dann noch axial zu fixieren bzw. zu sichern ist ein Sicherungsring um die beiden Flansche angeordnet. Der Sicherungsring wird durch zwei identische Halbschalen gebildet. Die beiden identischen Halbschalen werden 180° gedreht zueinander ausgerichtet, dass jeweils das Einsteckelement an der einen Halbschale in die 180° gedrehte identische Halbschale bzw. in das an der anderen Halbschale angeordnete Aufnahmeelement eingesteckt werden kann. Dadurch dass die Halbschalen identisch ausgebildet sind ist eine kostengünstige Herstellung möglich da nur ein Spritzgusswerkezug zu dessen Herstellung benötigt wird wie auch die hohen Stückzahlen durch die Verdoppelung der Teile aufgrund dessen, dass dieselbe Halbschale zweifach ausgeführt werden kann, einen tiefen Stückzahlpreis ermöglicht. Des Weiteren bringen die identischen Halbschalen den Vorteil mit sich, dass die Lagerhaltungskosten gering ausfallen. Zudem kann keine Verwechslung der Teile entstehen was eine korrekte Montage gewährleistet.
Die beiden Halbschalen umschliessen die stirnseitig aneinander liegenden Flansche wodurch ein axiales Verschieben der Rohrleitungskomponenten zueinander verhindert wird bzw. das Lösen der Verbindung verunmöglicht wird.
Die Halbschalen sind mittels eines Schnappverschlusses miteinander zu einem Sicherungsring verbindbar bzw. verbunden, wobei am einen Ende der Halbschale das Einsteckelement des Schnappverschlusses und am anderen Ende der Halbschale das Aufnahmeelement des Schnappverschlusses angeordnet ist. Durch die Anordnung des Schnappverschlusses an der Halbschale ist ein einfaches, schnelles und werkzeugloses Befestigen der zusammengesteckten Rohrleitungskomponenten möglich. Vorzugsweise ist der durch die Halbschalen gebildete Sicherungsring nur mittels Spezialwerkzeug lösbar, wodurch das Lösen der Verbindung durch unbefugte Personen vermieden werden kann.

Eine bevorzugte Ausführungsform besteht darin, dass das Einsteckelement mindestens einen elastischen Rastzahn aufweist, wobei sich der Rastzahn mit dem Aufnahmeelement der anderen Halbschale verhakt. Der Rastzahn verhakt sich derart im Aufnahmeelement des Schnappverschlusses, dass er nur mittels Spezialwerkezug gelöst werden kann und dadurch die beiden Halbschalen voneinander getrennt werden können.

Gemäss einer bevorzugten Ausführungsform weist das Einsteckelement zwei Finger auf an denen jeweils ein Rastzahn angeordnet ist und zur Verhakung mit dem Aufnahmeelement dient. Die Rastzähne an den Fingern des Einsteckelements sind vorzugsweise gegen die Stirnseiten der Halbschalen ausgerichtet um einen Zugang mit Spezialwerkzeug zum Trennen der beiden Halbschalen zu gewährleisten.

Vorzugsweise sind die Halbschalen aus Kunststoff hergestellt, speziell bevorzugt aus einem Polyamid.

Eine weitere Ausgestaltung der Erfindung besteht darin, dass die Einsteck- und Aufnahmeeinheit in ineinandergestecktem Zustand und mit dem Sicherungsring fixiert, zueinander drehbar bzw. ausrichtbar angeordnet sind. Dies ermöglicht ein Ausrichten der Rohrleitungskomponenten zueinander nach der Fixierung mittels der Halbschalen.

Die Erfindung zeichnet sich zusätzlich dadurch aus, dass die Einsteck- und Aufnahmeeinheit aus gleichen oder unterschiedlichen Materialen hergestellt sind.

Das bedeutet, dass beispielsweise zwei aus Kunststoff hergestellte Rohrleitungskomponenten mit angeformten Einsteck- und Aufnahmeeinheit miteinander verbunden werden können wie auch ein metallischer Rohrleitungskomponente mit einem Kunststoffkomponenten oder auch nur metallische Rohrleitungskomponenten. Vorzugsweise sind die eingesetzten Werkstoffe Kunststoffe oder Metalle.

Ein weiterer Vorteil der Verbindungseinheit besteht auch darin dass Einsteck- und Aufnahmeeinheiten an verschiedenen Rohrkomponenten angeordnet sind, d.h. an Verteilern, Abschlusskappen, Ventile, usw. wodurch ein modularer Zusammenbau möglich ist.

Ausführungsbeispiele der Erfindung werden anhand der Figuren beschrieben, wobei sich die Erfindung nicht nur auf die Ausführungsbeispiele beschränkt. Es zeigen:
- Fig. 1: eine Explosionsansicht unterschiedlich eingesetzter Verbindungseinheiten,
- Fig. 2: eine Ansicht einer Verbindungseinheit zwischen einem Verteiler und einem Anschlussgewindezapfen sowie einem Stopfen und
- Fig. 3: unterschiedliche Ausführungsformen von Halbschalen.

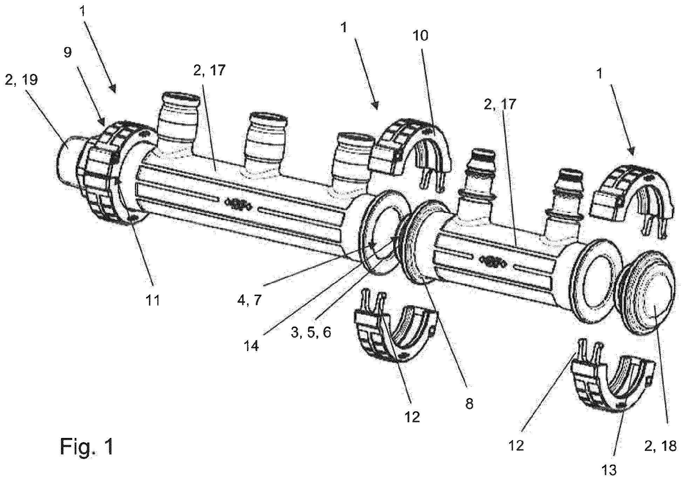

Die in Fig. 1 dargestellte Abbildung zeigt eine dreidimensionale Ansicht verschiedener Rohrleitungskomponenten 2 die jeweils durch eine erfindungsgemässe Verbindungseinheit 1 untereinander verbunden sind. Die Verbindungseinheit 1 weist jeweils eine Einsteckeinheit 3 und eine korrespondierende Aufnahmeeinheit 4 auf. Die Einsteckeinheit 3 und die Aufnahmeeinheit 4 sind ineinander steckbar ausgebildet. Die Einsteckeinheit 3 weist dazu einen zylinderförmigen Bund 5 auf, wobei der Aussendurchmesser 6 des zylinderförmigen Bunds 5 dem Innendurchmesser 7 der Aufnahmeeinheit 4 entspricht um die Einsteckeinheit 3 in die Aufnahmeeinheit 4 einzuführen. Zur Abdichtung ist vorzugsweise am zylinderförmigen Bund 5 ein Dichtelement 14 angeordnet. Die beiden Einheiten 3, 4 weisen jeweils einen Flansch 8 auf der bei der Aufnahmeeinheit 4 stirnseitig angeordnet ist und bei der Einsteckeinheit 3 hinter bzw. nach den zylinderförmigen Bund 5 angeordnet ist, so dass in montiertem Zustand bzw. wenn die Einsteckeinheit 3 und die Aufnahmeeinheit 4 ineinander gesteckt sind die Flansche 8 aneinander an liegen. Zur axialen Fixierung ist um die Flansche 8 ein Sicherungsring 9 angeordnet der die Flansche 8 vor der axialen Verschiebung zueinander bewahrt bzw. ein Lösen der Verbindung verhindert. Der Sicherungsring 9 wird durch zwei Halbschalen 10 gebildet, wobei die Halbschalen 10 mittels Schnappverschluss 11 miteinander verbindbar bzw. zum Sicherungsring 9 verbunden sind. An den Enden der Halbschalen 10 ist jeweils das Einsteckelement 12 oder das Aufnahmeelement 13 angeordnet. Die beiden Halbschalen 10 sind identisch ausgebildet. Durch das Ineinanderstecken des Einsteckelements 12 an der Halbschale 10 mit dem Aufnahmeelement 13 an der andern Halbschale 10 ist der Sicherungsring 9 montierbar, somit weist der Sicherungsring zwei Schnappverschlüsse 9 auf.
Fig. 1 zeigt einige der verschiedenen Rohrleitungskomponenten 2 die miteinander verbindbar sind. Beispielsweise sind zwei Verteiler 17 mit Hilfe der erfindungsgemässen Verbindungseinheit 1 miteinander verbunden, wie auch die Möglichkeit des Anbringens eines Stopfens 18 zum Verschliessen einer Rohrleitung besteht oder zum Vorsehen eines Anschlussgewindezapfen 19 für die Möglichkeit des Anschliessens von Elementen die ein Anschlussgewinde aufweisen. Die Rohrleitungskomponenten 2 können dieselben Materialien wie auch unterschiedliche Materialien zueinander aufweisen. Bevorzugte Materialen für die Rohrleitungskomponenten 2 sind Kunststoffe wie auch Metalle. Die Halbschalen 10 sind vorzugsweise aus Kunststoff hergestellt, speziell bevorzugt aus einem Polyamid.

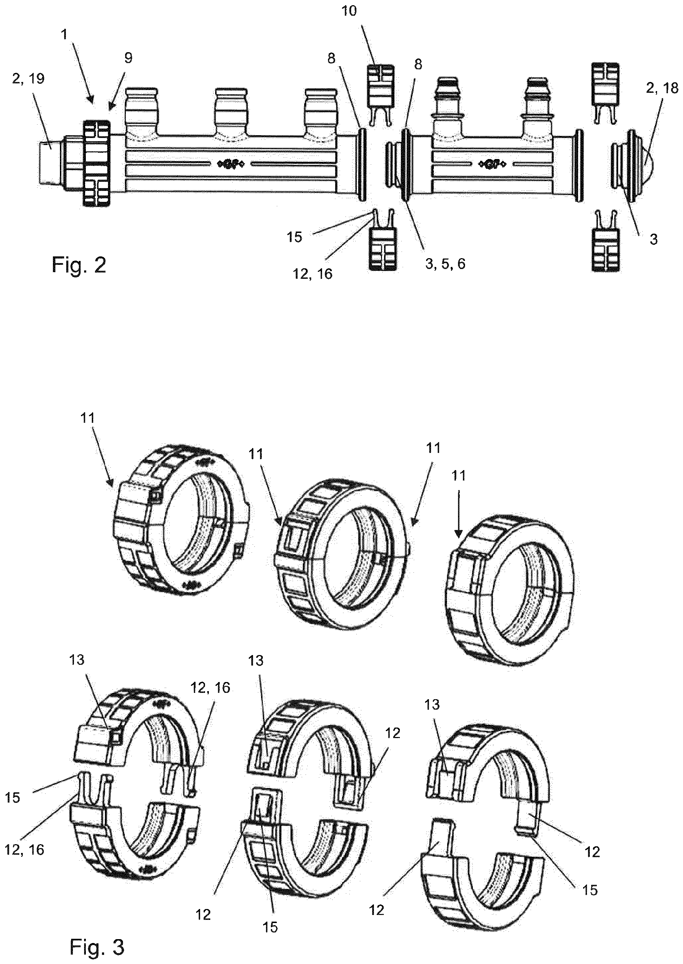

Fig. 2 zeigt eine erfindungsgemässe Verbindungseinheit 1, die als zu verbindende Rohrleitungskomponente 2 einen Verteiler 17 aufweist und dieser auf der einen Seite mit einem Anschlussgewindezapfen 19 verbunden ist. Der Anschlussgewindezapfen 19 weist eine angeformte Aufnahme- und Einsteckeinheit 3, 4 auf, die entsprechend mit dem Verteiler 17 verbunden werden kann, der ebenfalls eine Einsteck- und Aufnahmeeinheit 3, 4 aufweist. Die Halbschalen 10 sind um die beiden stirnseitig aneinander anliegenden Flansche 8 angeordnet und sind über ihre Schnappverschlüsse 11, die jeweils auf den beiden Seiten der Halbschalenenden angeordnet sind, miteinander zu einem Sicherungsring 9 verbunden. In Fig. 2 ist die eine Halbschale 10 noch nicht mit der anderen Halbeschale 10 an den Rohrleitungskomponenten 2 verbunden dargestellt. Dadurch ist das Einsteckelement 12 sowie das korrespondierende Aufnahmeelement 13 des Schnappverschlusses 11 gut erkennbar. Das Einsteckelement 12 weist vorzugsweise mindestens einen Rastzahn 15 auf, der sich im Aufnahmeelement 13 verhakt und sich dadurch die zwei identischen Halbschalen 10 zu einem Sicherungsring 9 verbinden lassen. Vorteilhaft ist es, wenn sich der Sicherungsring 9 nur mit Hilfe eines Spezialwerkzeugs lösen lässt. Verschiedene mögliche Ausführungsformen von Halbschalen 10, die sich mittels Schnappverschluss 11 zu einem Sicherungsring 9 verbinden lassen sind in Fig. 3 abgebildet, in offenem wie auch bereits zu einem Sicherungsring 9 verhakten Zustand. Vorzugsweise weisen alle abgebildeten Varianten einen Rastzahn 15 am Einsteckelement 12 auf, der sich beim Zusammenführen der Halbschalen 10 zu einem Sicherungsring 9 im Aufnahmeelement 13 der gegenüberliegenden Halbschale 10 verhakt. Der Rastzahn 15 ist elastisch ausgebildet.
Eine bevorzugte Ausführungsform der Halbschalen 10 ist in Fig. 2 abgebildet. Das Einsteckelement 12 weist zwei Finger 16 auf welche jeweils einen Rastzahn 15 aufweisen und sich diese im Aufnahmeelement 13 verhakt. Vorzugsweise sind die Rastzähne 15 gegen die Stirnseiten der Halbschalen ausgerichtet, dass die Zugänglichkeit mittels Spezialwerkezug zum Öffnen des Sicherungsrings 9 gewährleistet ist.

### Bezugszeichenliste

- 1: Verbindungseinheit
- 2: Rohrleitungskomponente / Anschlusselement
- 3: Einsteckeinheit
- 4: Aufnahmeeinheit
- 5: Zylinderförmiger Bund
- 6: Aussendurchmesser zylinderförmiger Bund
- 7: Innendurchmesser Aufnahmeeinheit
- 8: Flansch
- 9: Sicherungsring
- 10: Halbschale
- 11: Schnappverschluss
- 12: Einsteckelement
- 13: Aufnahmeelement
- 14: Dichtelement
- 15: Rastzahn
- 16: Finger
- 17: Verteiler
- 18: Stopfen
- 19: Anschlussgewindezapfen

## Patentansprüche

1. Verbindungseinheit (1) mit zu verbindenden Rohrleitungskomponenten (2) insbesondere Anschlusselementen, enthaltend eine Einsteckeinheit (3) und eine korrespondierende Aufnahmeeinheit (4), wobei die Einsteck- und Aufnahmeeinheit (3, 4) mit den zu verbindenden Rohrleitungskomponenten einstückig ausgebildet sind, wobei die Einsteckeinheit (3) als zylinderförmiger Bund (5) ausgebildet ist, dessen Aussendurchmesser (6) dem Innendurchmesser (7) der Aufnahmeeinheit (4) entspricht und ineinander steckbar sind, wobei am Aussenumfang des zylinderförmigen Bunds (5) der Einsteckeinheit (3) oder am Innenumfang (7) der Aufnahmeeinheit (4) ein Dichtelement (14) angeordnet ist, wobei an der Einsteckeinheit (3) und an der Aufnahmeeinheit (4) jeweils ein Flansch (8) angeordnet ist, wobei der Flansch (8) an der Einsteckeinheit (3) nach bzw. hinter dem zylindrischen Bund (5) angeordnet ist und der Flansch (8) an der Aufnahmeeinheit (4) an der Stirnseite angeordnet ist, wobei bei zusammengesteckter Einsteck- und Aufnahmeeinheit (3,4) die Flansche (8) stirnseitig aneinander liegen, einen Sicherungsring (9) zur axialen Fixierung der zusammengesteckten Einsteck-und Aufnahmeeinheit (3, 4) wobei der Sicherungsring (9) aus zwei identischen Halbschalen (10) besteht, wobei die Halbschalen (10) die stirnseitig aneinander liegenden Flansche (8) umschliessen, **dadurch gekennzeichnet, dass** die Halbschalen (10) mit einem Schnappverschluss (11) miteinander verbunden sind, wobei am einen Ende der Halbschale ein Einsteckelement (12) des Schnappverschluss (11) und am anderen Ende der Halbschale (10) ein Aufnahmeelement (13) des Schnappverschluss (11) angeordnet sind, wobei die Rohrkomponenten Verteiler, Abschlusskappen und Ventile sind, wodurch ein modularer Zusammenbau möglich ist.

2. Verbindungseinheit (1) nach Anspruch 1, **dadurch gekennzeichnet, dass** das Einsteckelement (12) mindestens einen elastischen Rastzahn (15) aufweist, wobei sich der Rastzahn (15) mit dem Aufnahmeelement (13) der anderen Halbschale (10) verhakt.

3. Verbindungseinheit (1) nach Anspruch 1 oder 2, **dadurch gekennzeichnet, dass** das Einsteckelement (12) zwei Finger (16) aufweist, an denen jeweils ein Rastzahn (15) angeordnet ist und zur Verhakung mit dem Aufnahmeelement (13) dient.

4. Verbindungseinheit (1) nach eine der Ansprüche 1 bis 3, **dadurch gekennzeichnet, dass** die Halbschale (10) aus Kunststoff hergestellt ist, vorzugsweise aus einem Polyamid.

5. Verbindungseinheit (1) nach einem der Ansprüche 1 bis 4, **dadurch gekennzeichnet, dass** Einsteck- und Aufnahmeeinheit (3, 4) ineinandergesteckt und mit dem Sicherungsring (8) fixiert, zueinander drehbar bzw. ausrichtbar angeordnet sind.

6. Verbindungseinheit (1) nach einem der Ansprüche 1 bis 5, **dadurch gekennzeichnet, dass** die Einsteck- und Aufnahmeeinheit (3,4) aus gleichen oder unterschiedlichen Materialen hergestellt sind.

## Claims

1. Connecting unit (1) with pipeline components (2), in particular connection elements, to be connected, comprising a plug-in unit (3) and a corresponding receiving unit (4), wherein the plug-in unit (3) and the receiving unit (4) are formed in one piece with the pipeline components to be connected, wherein the plug-in unit (3) is in the form of a cylindrical collar (5) of which the outside diameter (6) corresponds to the inside diameter (7) of the receiving unit (4), and the said plug-in unit and receiving unit can be inserted one into the other, wherein a sealing element (14) is arranged on the outer circumference of the cylindrical collar (5) of the plug-in unit (3) or on the inner circumference (7) of the receiving unit (4), wherein a flange (8) is arranged on the plug-in unit (3) and on the receiving unit (4) respectively, wherein the flange (8) on the plug-in unit (3) is arranged downstream of or behind the cylindrical collar (5) and the flange (8) on the receiving unit (4) is arranged at the end side, wherein, when the plug-in unit (3) and the receiving unit (4) are plug-connected, the flanges (8) bear against one another at the end sides, and comprising a securing ring (9) for axially fixing the plug-connected plug-in unit (3) and receiving unit (4), wherein the securing ring (9) consists of two identical half-shells (10), wherein the half-shells (10) surround the flanges (8) which bear against one another at the end sides, **characterized in that** the half-shells (10) are connected to one another by a snap-action closure (11), wherein a plug-in element (12) of the snap-action closure (11) is arranged at one end of the half-shell and a receiving element (13) of the snap-action closure (11) is arranged at the other end of the half-shell (10), wherein the pipe components are distributors, closure caps and valves, as a result of which a modular assembly is possible.

2. Connecting unit (1) according to Claim 1, **characterized in that** the plug-in element (12) has at least one elastic latching tooth (15), wherein the latching tooth (15) interengages with the receiving element (13) of the other half-shell (10).

3. Connecting unit (1) according to Claim 1 or 2, **characterized in that** the plug-in element (12) has two fingers (16), on each of which a latching tooth (15) is arranged and serves to interengage with the receiving element (13).

4. Connecting unit (1) according to one of Claims 1 to 3, **characterized in that** the half-shell (10) is produced from plastic, preferably from a polyamide.

5. Connecting unit (1) according to one of Claims 1 to 4, **characterized in that** the plug-in unit (3) and the receiving unit (4) are arranged in a manner inserted one into the other and fixed by the securing ring (9) such that they can be rotated or oriented in relation to one another.

6. Connecting unit (1) according to one of Claims 1 to 5, **characterized in that** the plug-in unit (3) and the receiving unit (4) are produced from the same or different materials.

## Revendications

1. Unité de liaison (1) comprenant des composants de conduite tubulaire (2) à relier, notamment des éléments de raccordement, comprenant une unité à enficher (3) et une unité d'accueil (4) correspondante, les unités à enficher et d'accueil (3, 4) étant réalisées d'un seul tenant avec les composants de conduite tubulaire à relier, l'unité à enficher (3) étant réalisée sous la forme d'un collet (5) cylindrique dont le diamètre extérieur (6) correspond au diamètre intérieur (7) de l'unité d'accueil (4), et pouvant être enfichées l'une dans l'autre, un élément d'étanchéité (14) étant disposé sur le pourtour extérieur du collet (5) cylindrique de l'unité à enficher (3) ou sur le pourtour intérieur (7) de l'unité d'accueil (4), une bride (8) étant respectivement disposée sur l'unité à enficher (3) et sur l'unité d'accueil (4), la bride (8) sur l'unité à enficher (3) étant disposée vers le collet (5) cylindrique ou derrière celui-ci et la bride (8) sur l'unité d'accueil (4) étant disposée du côté frontal, les brides (8) reposant l'une contre l'autre du côté frontal dans l'état où les unités à enficher et d'accueil (3, 4) sont assemblées par enfichage, un anneau de retenue (9) servant au blocage axial des unités à enficher et d'accueil (3, 4) assemblées par enfichage, l'anneau de retenue (9) se composant de deux demi-coques (10), les demi-coques (10) entourant les brides (8) reposant l'une contre l'autre du côté frontal, **caractérisée en ce que** les demi-coques (10) sont reliées l'une à l'autre avec un fermoir à déclic (11), un élément à enficher (12) du fermoir à déclic (11) étant disposé à une extrémité de la demi-coque et un élément d'accueil (13) du fermoir à déclic (11) à l'autre extrémité de la demi-coque (10), les composants tubulaires étant des distributeurs, des caches de fermeture et des vannes, ce qui permet un assemblage modulaire.

2. Unité de liaison (1) selon la revendication 1, **caractérisée en ce que** l'élément à enficher (12) possède au moins une dent d'encliquetage (15) élastique, la dent d'encliquetage (15) se verrouillant avec l'élément d'accueil (13) de l'autre demi-coque (10).

3. Unité de liaison (1) selon la revendication 1 ou 2, **caractérisée en ce que** l'élément à enficher (12) possède deux doigts (16) au niveau desquels est respectivement disposée une dent d'encliquetage (15) qui sert au verrouillage avec l'élément d'accueil (13).

4. Unité de liaison (1) selon l'une des revendications 1 à 3, **caractérisée en ce que** la demi-coque (10) est fabriquée en matière plastique, de préférence en un polyamide.

5. Unité de liaison (1) selon l'une des revendications 1 à 4, **caractérisée en ce que** les unités à enficher et d'accueil (3, 4) enfichées l'une dans l'autre et bloquées avec l'anneau de retenue (9) peuvent tourner ou être orientées l'une par rapport à l'autre.

6. Unité de liaison (1) selon l'une des revendications 1 à 5, **caractérisée en ce que** les unités à enficher et d'accueil (3, 4) sont fabriquées dans des matériaux identiques ou différents.
